# EUROPEAN PATENT SPECIFICATION

(11) **EP 2 398 211 B1**
(45) Date of publication and mention of the grant of the patent: **06.11.2013**
(21) Application number: 11004962.4
(22) Date of filing: 17.06.2011
(51) Int. Cl.: H04L 29/08, H04L 29/12

(54) **Massively scalable multilayered load balancing based on integrated control and data plane**
Stark skalierbare mehrschichtige Lastverteilung auf Basis einer integrierten Steuerungs- und Datenebene
Équilibrage de charge multicouche extensible en masse basé sur le contrôle intégré et le panneau de données

(30) Priority: 18.06.2010 US 818848
(43) Date of publication of application: 21.12.2011
(73) Proprietor: Cellco Partnership D/B/A Verizon Wireless, Basking Ridge NJ 07920-1097 (US)
(72) Inventor: Kakadia, Deepak, Union City CA 94587 (US); Duda, Ken, Menlo Park CA 94025 (US)
(74) Representative: Müller-Boré & Partner Patentanwälte

(56) References cited:
- WO-A2-2006/072114
- US-A1- 2006 013 147
- WOLLMAN H JEGERS THE MITRE CORPORATION SERVER LOAD BALANCING REGISTRATION PROTOCOL W: "Server Load Balancing Registration Protocol; draft-wollman-slbrp-00.txt", IETF STANDARD-WORKING-DRAFT, INTERNET ENGINEERING TASK FORCE, IETF, CH, 1 November 2003 (2003-11-01), XP015036968, ISSN: 0000-0004

## Description

### BACKGROUND

### 1. Technical Field

The present teaching relates to methods, systems and programming for load balancing in telecommunications and systems incorporating the same.

### 2. Discussion of Technical Background

With the advancement of computing networks and the Internet, more and more services are provided across the network. Due to the sharp increase in the volume of business conducted on the Internet and the Internet's nature of access without boundaries in terms of geographical coverage, nearly all Internet based services are now offered by servers located in a distributed manner to allow service efficiency, load balance, or fault tolerance. For example, an Internet user may find news by visiting cnn.com from almost anywhere in the world. Although it may seem that such users are getting services from one Internet location, namely cnn.com, there may be many servers distributed around the world that all offer the same services corresponding to cnn.com. A user located in the United Stated may be served by a server located in the United States, but a user located in Asia may be served by a different server located in Asia, even though both users requested cnn.com services. It is frequently the case that there may even be multiple servers corresponding to cnn.com in the United States that are deployed to provide the same services. For instance, a user located in San Francisco may be served by a different server than users logged in from, e.g., New York State.

When multiple servers are deployed for the same Internet service, there is a decision as to which server is going to provide the underlying service responsive to a particular service request from a user. The decision may be made based on various considerations. It is often desirable to choose a server that is close to the user who requested the service, i.e., the network distance between the user and the server is shorter. A server located in California may be more likely assigned to serve a request coming from a user located in the western part-of the United States. Frequently, another important factor to be considered is load balancing. To ensure service quality, a server that provides the underlying service should have a reasonable response time. A server that is overloaded or has some kind of health problem will not be able to ensure a reasonable response time. Whenever load balancing is applicable, the decision as to which server a request for service is directed to is, in general, based on the health condition of servers. Many systems may select a server for each service request based on a combination of considerations.

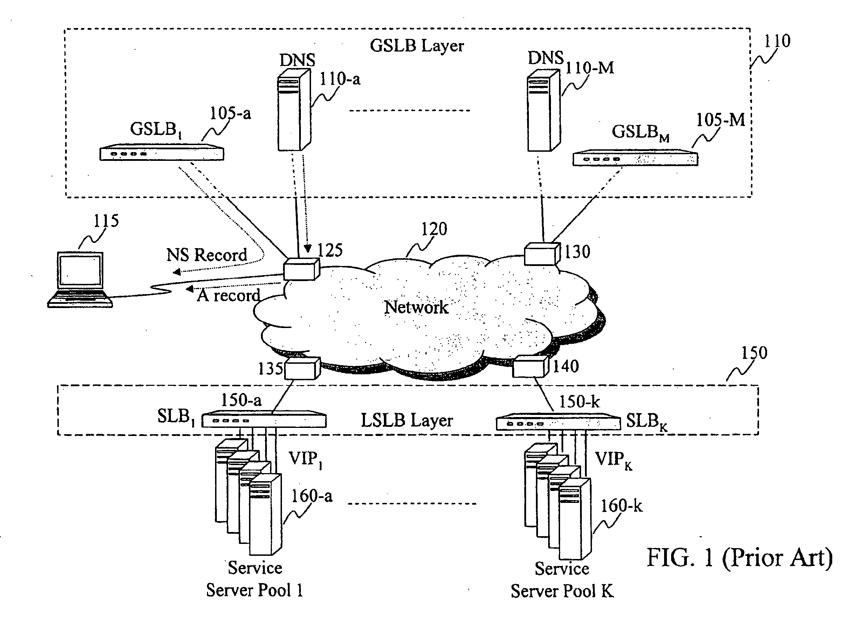

A conventional mechanism to achieve load balancing is shown in FIG. 1 (Prior Art). In this mechanism, there are two layers (levels) of load balancing, i.e., the global server load balancers (GSLB) layer 110 and the local server load balancers (LSLB) layer 150. The GSLB layer 110 performs load balancing at the domain name service (DNS) level and comprises a plurality of balancers GSLB 1 105-a, ..., GSLB M 105-M, each of which connects with DNS servers 110-a, ..., 110-M. The LSLB layer 150 comprises a plurality of local server load balancers SLB 1 150-a, ..., SLB K 150-k, each of which is associated with a server pool that includes one or more servers capable of providing certain Internet services. Each local server load balancer SLB is associated with a distinct virtual IP address or VIP representing the server group associated therewith. For example, SLB 1 150-a has a virtual IP address VIP1 representing the server group 160-a, ..., SLB K has a virtual IP address VIP K representing the server group 160-k. With this architecture, when multiple servers deployed to offer a particular service are distributed in different server pools associated with different SLBs, the service is represented by different VIPs.

In operation, when a client 115 needs a service, the client a DNS query sends first to a router 125 via network 120, which subsequently forwards the request to a global server load balancer (e.g., GSLB 1 105-a). The GSLB retrieves an NS record corresponding to the address of a DNS server (e.g., 110-a) and sends the NS record back to the client 115. The client 115 then uses the NS record to find the corresponding DNS server (e.g., 110-a) and requests an A record, which resolves a name of the desired service to a virtual IP address. Thus, the GSLB layer 110 resolves a service canonical name to a virtual IP (VIP) address, which corresponds to, in the illustrated scheme, a particular local server load balancer SLB. When the client 115 receives the A record containing a VIP address, the client sends a service request to the VIP address. When the SLB corresponding to the VIP address receives the service request, it performs a second level of load balancing by selecting one server from the associated server pool to provide the requested service.

Document WO 2006/072114 A2 relates to a method and apparatus for geolocating load balancing. A communinication network architecture is provided which includes multiple servers, multiple load balancers, and multiple geographically dispersed communication devices. The servers provide services to the communication devices within the communication network. The load balancers each service a shared virtual IP address common to all of the load balancers and perform load balancing of service requests on behalf of two or more of the servers that are located geographically proximate to the load balancer.

### SUMMARY

The teachings disclosed herein relate to methods and systems for massively scalable multilayered load balancing architecture based on integrated control and data plane.

According to a several aspect according to a method as claimed in claim 1, a load balancing router having a processor, a storage, and a communication platform connected to a network for load balancing with respect to services, receives a request for a service represented by a fixed virtual IP address. To respond to the request, the load balancing router accesses information received from a plurality of advertising routers in the network, each of which advertises, via the fixed virtual IP address, the service, provided by at least one server in a server pool associated with each of the advertising routers, with metrics indicating a health condition of the associated server pool. The load balancing router then selects a target one of the advertising routers based on, at least in part, the metrics indicating the health condition of the server pools associated with the advertising routers, to achieve a first level load balancing. The request for service is then forwarded to the target router so that a local server load balancer (SLB) connected with the target router is to identify a target server from the associated server pool to provide the requested service whereby to achieve a second level load balancing.

According to a general aspect according to a method as claimed in claim 8, a advertising router having a processor, a storage, and a communication platform connected to a network for loading balancing with respect to networked services, dynamically obtains information related to health of at least one server in a pool of servers associated with the first advertising router, where all of servers in the pool of server provide a service represented by a fixed virtual IP address and computes metrics indicating health condition of the associated server pool based at least in part on the information related to health. Based on, at least in part, the metrics, the advertising router generates an advertisement for a service and sends the advertisement to a plurality of routers in the network to advertise the service via a fixed virtual IP address representing the service with the health metrics transmitted therewith. The advertising router is associated with one or more servers providing the service and one or more other advertising routers, all of which advertise the service via the fixed virtual IP address across the network. A first level of load balancing among one or more servers associated with the advertising router is achieved based on the advertisement transmitted by all the advertising routers.

In yet another example, a domain name service (DNS) having one fixed virtual IP address for each service provided by a plurality of servers is implemented on a computer having a processor, a storage, and a communication platform connected to a network for loading balancing with respect to networked services. The DNS stores a fixed virtual IP address for each of a plurality of services, where each service is provided by any one of a plurality of servers distributed in the network. When the DNS server receives, from a client, a first request for a service, the DNS server identifies a fixed virtual IP address for the service and provides the client with the single IP address for the service, which is subsequently forwarded together with a second request from the client to a first router connected therewith to request the service. In this example, the fixed virtual IP address for the service is used by a plurality of advertising routers in the network to advertise the service in the network and each of the advertising routers is associated with a server pool, having one or more servers therein all of which provide the service, and each of the advertisements include metrics indicating health condition of a server pool associated with the advertising router. For each request, one of the advertising routers is selected, by the first router, as a target router based, at least in part, on the metrics to achieve a first level load balancing, so that the second request is forwarded to the target router and the server pool associated with the target router is to provide the service.

In a different example, a system is implemented on a plurality of computing devices, each having a processor, a storage, and a communication platform connected with a network for session persistence across the network. When a first computing device, serving as a first local server load balancer (SLB), receives a request for a service represented by a fixed virtual IP address, where the local SLB is associated with a server pool having one or more servers, each of which provide the service represented by the fixed virtual IP address, the first computing device selects, a target server, from the server pool to provide the requested service to achieve load balancing while maintaining session persistence when the requested service is identified as an existing persistent session. The session persistence is maintained based on persistence session (PS) records stored in a shared state memory (SSM) that are shared among a plurality of servers providing the service and associated with a plurality of local SLBs distributed across the network.

Other concepts relate to unique software for implementing the one or more of the load balancing techniques. A software product, in accord with this concept, includes at least one machine-readable medium and information carried by the medium. The information carried by the medium may be executable program code regarding load balancing.

Additional advantages and novel features will be set forth in part in the description which follows, and in part will become apparent to those skilled in the art upon examination of the following and the accompanying drawings or may be learned by production or operation of the examples. The advantages of the present teachings may be realized and attained by practice or use of various aspects of the methodologies, instrumentalities and combinations set forth in the detailed examples discussed below.

### BRIEF DESCRIPTION OF THE DRAWINGS

The methods, systems and/or programming described herein are further described in terms of exemplary embodiments. These exemplary embodiments are described in detail with reference to the drawings. These embodiments are non-limiting exemplary embodiments, in which like reference numerals represent similar structures throughout the several views of the drawings, and wherein:

FIG. 1 (Prior Art) shows a conventional multilayered load balancing scheme;

FIG. 2 depicts an exemplary architecture for multilayered load balancing with integrated control and data planes;

FIG. 3(a) describes an exemplary operational flow in which load balancing is achieved in the control plane with respect to a service request;

FIG. 3(b) shows a route table based on which a router selects a target router that balances server pool load based on advertising information from other routers;

FIG. 4(a) is a flowchart of an exemplary process in which a domain name service (DNS) request in association with a service is resolved with a fixed IP address;

FIG. 4(b) is a flowchart of an exemplary process in which a router achieves load balancing with respect to a service request based on information from routers that advertise the service;

FIG. 4(c) is a flowchart of an exemplary process in which a router, connected with a local server load balancer having an associated server pool providing a service, advertises the service and handles a service request;

FIG. 5 depicts an exemplary construct of a local sever load balancer;

FIG. 6 is a flowchart of an exemplary process in which a local server load balancer selects a server from an associated server pool upon receiving a service request to achieve load balancing;

FIG. 7 is a flowchart of an exemplary process in which a local server load balancer performs exception handling;

FIG. 8 depicts an exemplary architecture that supports shared state memory for multiple local server load balancers in handling session persistence;

FIG. 9 depicts a different exemplary architecture that supports shared state memory for multiple local server load balancers in handling session persistence;

FIG. 10 depicts yet another exemplary architecture that supports shared state memory for multiple local server load balancers in handling session persistence; and

FIG. 11 is a high level functional block diagram of a computing device, on which multilayered load balancing with integrated control and data planes can be implemented.

### DETAILED DESCRIPTION

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

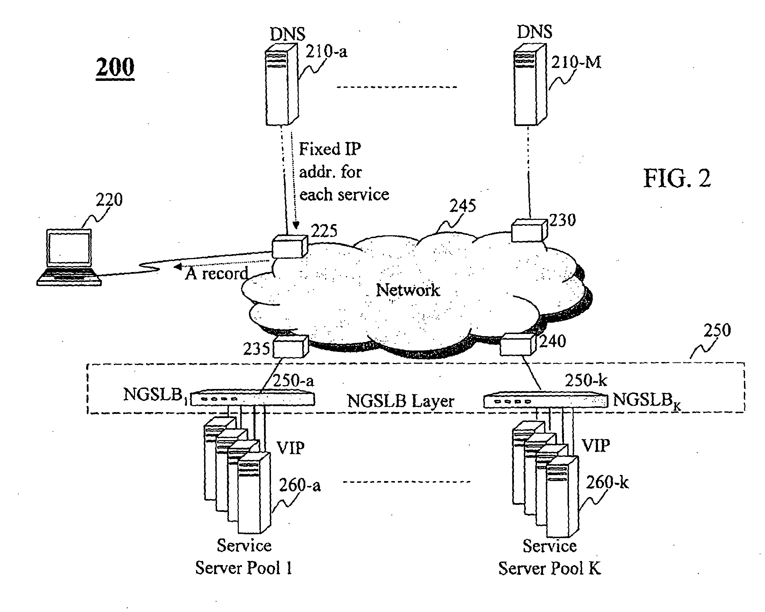

The present teaching relates to apparatus and method for multilayered load balancing with integrated control and data plane, in which the control plane is massively scalable with deterministic performance to achieve global load balancing and the data plane is designed to achieve local load balancing. FIG. 2 depicts an exemplary architecture 200 for the multilayered load balancing with integrated control and data planes. The architecture 200 comprises a client 220 that is connected to a network 245, a plurality of DNS servers 210-a, ..., 210-k, a new generation server load balancer (NGSLB) layer 250 including a plurality of load balancers NGSLB 1 250-a, ..., NGSLB K 250-k, each of which is associated with a server pool, server pool 1 260-a, ..., server pool K 260-k, respectively, having one or more servers in an associated server pool capable of providing certain services. In this architecture, in DNS servers, each service corresponds to a fixed virtual IP (VIP) address. This is so even when there are several server pools associated with different NGSLBs. That is, server pools associated with different NGSLBs providing a same service are identified using the same VIP address. This is different from the prior art architecture, shown in FIG. 1, where different server pools associated with different SLBs have distinct VIP addresses even when they provide the same service. For example, according to the present teaching, cnn.com has one fixed IP address (e.g., 1.1.1.1) assigned to the service and the DNS configuration is set in such a manner.

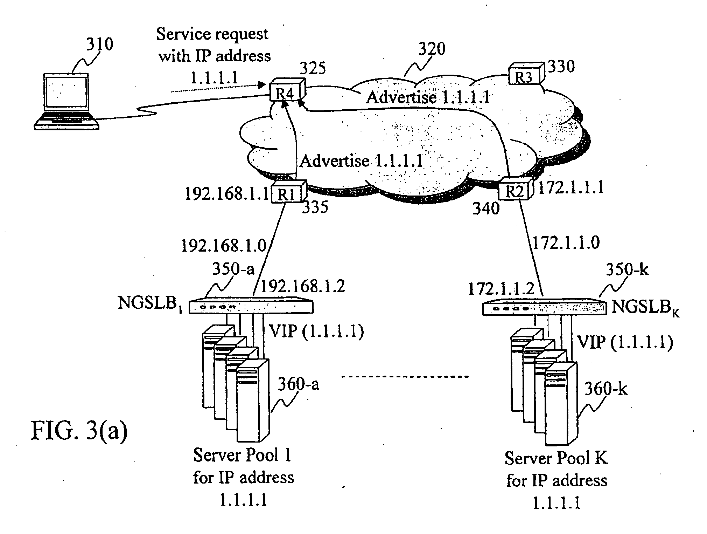

In operation, when the client 220 desires a service, it sends a DNS query to a router 225, which then forwards the DNS query to a DNS server, e.g., 210-a. The DNS server resolves the DNS query by returning directly an A record containing the fixed VIP for that service to the client 220 via router 225. That is, at the DNS level, no load balancing is performed and, hence, the DNS service is much simplified in accordance with the configuration of architecture 200. Alternatively, the load balancing of the first layer across different local server load balancers (NGSLBs) is achieved by routers in the network based on information received from other routers in the network advertising a relevant service with metrics related to the health condition of associated server pools capable of providing the service. This is described in detail with reference to FIG. 3(a).

In architecture 200, when the client 220 receives the fixed VIP address for the desired service, the client sends a service request with the fixed VIP address to router 225. Upon receiving the service request from client 220, router 225 then performs the first layer load balancing based on information received from other routers in the network 245 that advertise the service represented by the fixed VIP address. For instance, routers 235 and 240 may both advertise the service desired by the client 220 by sending advertisement of the same VIP representing the desired service provided by the server pools associated with NGSLB 250-a and 250-k that are connected to the routers 235 and 240, respectively. In sending such advertisement, routers 235 and 240 also provide different metrics characterizing the connected NGSLBs. For example, such metrics include information indicating the health condition of the associated server pools 260-a and 260-k. The metrics may also include other conventional types of information such as the network distance represented by, e.g., the number of hops needed to reach the routers. Such information may be delivered to a recipient router via protocols already in use in the industry such as an interior gateway protocol (IGP) or any other protocols that can be utilized to deliver such information.

When router 225 receives the advertisement information from other routers in the network advertising a service (represented by the fixed VIP address) desired by the client 220, router 225 selects a target router (from multiple routers all of which advertise the desired service) to which the service request is to be forwarded. Such a selection is made so that the first level of load balancing across different NGSLBs is achieved. Router 225 selects a target router that not only advertises that its associated NGSLB is capable of providing the desired service but also has metrics that meet certain criteria with respect to load balancing. For example, router 225 may select router 240 as the target router to which the service request is forwarded because server pool 260-k may have a good health condition (e.g., being less loaded) that is more suitable to provide the desired service to client 220 with a better response time. Once the target router is selected, router 225 forwards the service request to the target router, which then forwards the request to the NGSLB connected to it. Subsequently, the NGSLB that receives the service request performs another level of load balancing to select a target server among the servers in its associated server pool to provide the requested service.

FIG. 3(a) describes a specific example of first level load balancing across different NGSLBs in the control plane after a client 310 obtains a VIP address from a DNS server (not shown) for a desired service. In the illustrated example, the fixed VIP address for the desired service is 1.1.1.1. As seen in FIG. 3(a), there are two NGSLBs, NGSLB 1 350-a and NGSLB k 350-k, that are associated with the same VIP address 1.1.1.1. This indicates that both NGSLBs are associated with respective server pools, 360-a and 360-k, that are configured to provide the service represented by the VIP address 1.1.1.1. In the illustrated example, NGSLB 1 350-a has a network address 192.168.1.2 and it is connected to a router 335 that has a network address of 192.168.1.1. On the other hand, NGSLB K 350-k has a network address 172.1.1.2 and it is connected to a router 340 that has a network address 172.1.1.1.

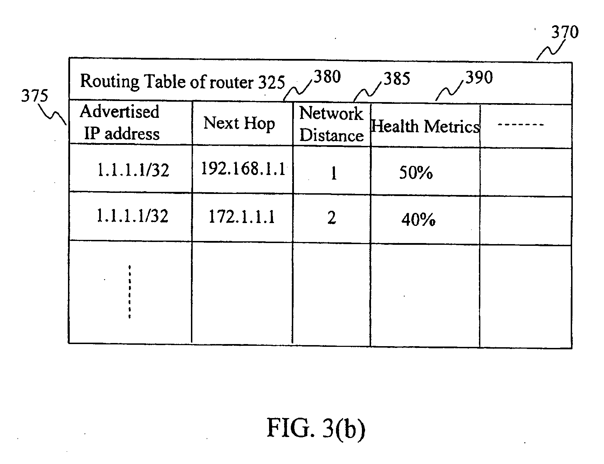

In accordance with the load balancing scheme as disclosed herein, the first level of load balancing with respect to a desired service is achieved by routers in the network based on advertising information from routers that are connected with NGSLBs and their associated server pools offering the service. In the example shown in FIG. 3, routers 335 and 340 advertise service represented by VIP address 1.1.1.1 by sending advertisement of VIP 1.1.1.1 to network 320 so that other routers, e.g., router 325, in the network can route a request for the service 1.1.1.1 to one of those advertising routers. The decision in terms of which of the advertising routers the service request is directed to is to be made so that load balancing criteria (and other criteria) will be met. To achieve that, each NGSLB associated with a server pool that provides the desired service collects information related to the health condition of the server pool and passes that information to the router it connects to. For example, NGSLB 1 350-a monitors and gathers health information of server pool 360-a and sends such dynamically collected information to router 335. Similarly, NGSLB K 350-k monitors and gathers health information of server pool 360-k and sends such dynamically collected information to router 340.

With the received health information from respective NGSLBs, routers 335 and 340 incorporate such information in their advertisements of service 1.1.1.1 and send the advertisements to the network 320. In this way, when any recipient router, e.g., router 325, receives the advertisement for service 1.1.1.1 from a specific advertising router, the recipient router is made aware of the health condition of the server pool associated with the advertising router. In addition to the health information, an advertising router may also incorporate other conventional information, such as the network distance (e.g., number of hops) to reach the advertising router, in the advertisement so that a recipient router can make a routing decision based on a variety of information. An advertising router may send its advertisement using any protocol available. One example of such a protocol is IGP. It is understood by a person skilled in the art that the present teaching as disclosed herein is not limited to any particular protocol used to advertise a networked service.

When a recipient router, such as router 325, receives information from another router advertising a service, it incorporates the received information in a routing table in a way so that the recipient router can make a routing decision based on the information incorporate therein. FIG. 3(b) shows an exemplary routing table 370 of router 325 based on which router 325 can select a target router advertising a particular service, based on information incorporated in the table, to route a service request. For example, routing table 370 includes information such as the VIP address of the service advertised (375), the next hop where the advertising router can be reached (380), the network distance to reach the advertising router (385), and health metrics (390), etc. To achieve a global (first) level load balancing in the multilayered load balancing scheme as disclosed herein, information indicating the health condition of each server pool associated with an advertising router is to be used in selecting a target router to which the service request is forwarded.

From routing table 370, there are two entries related to desired service 1.1.1.1, one is from advertising router 335 with the next hop at 192.168.1.1 and advertising router 340 with the next hop at 172.1.1.1, where the former has a network distance of 1 (hop) and the latter has a network distance of 2 (hops) from router 325. In addition, with respect to each advertising router for service 1.1.1.1, health metrics indicate respectively the health condition of the server pools (360-a and 360-k) associated with routers 335 and 340 (also NGSLB 1 350-a and NGSLB 350-k). The health information can include different measurements. In some embodiments, an overall load to a server pool may be indicated (as shown in FIG. 3(a)). In some embodiments, different types of metrics or combinations of metrics may be included. Based on such information, router 325 will then select a target router to which the service request will be directed.

As can be seen, in routing table 370, it is recorded that advertising router 335 (from network address 192.168.1.1) has a shorter network distance but with a heavier load of 50% on the associated server pool 360-a. Advertising router 340 (from network address 172.1.1.1) has a longer network distance but with a lighter load of 40% on the associated server pool 360-k. Router 325 may have a configuration in which a certain selection algorithm may be executed based on the information from the routing table to select a target router. In this manner, the first level load balancing is achieved via the control plane of the network routing. Although different target router selection algorithms may produce a different selection (e.g., some may select router 335 and some may select router 340 given the information provided in this example), it is understood that any selection algorithm that utilizes the health information in the routing table to achieve a first level of load balancing in selecting a target router is within the scope of the present teaching.

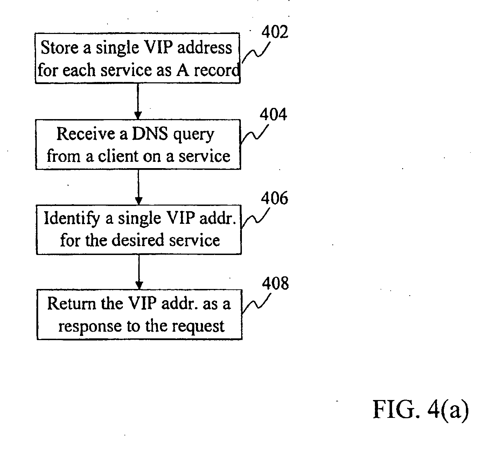

As discussed herein, the multilayered load balancing scheme according to the present teaching removes the load balancing traditionally performed by the global SLB (see FIG. 1) and replaces it with a load balancing operation performed in the control plane of routers by leveraging the existing network architecture and components. Under the present teaching, for each service, there is only one corresponding VIP address, no matter where the server pools providing that service are located in the network. Due to that, both the system structure and operation at DNS level are much simplified, as shown in FIG. 2. There is no longer a need to resolve for different VIP addresses at the DNS level and there is no need to know how many VIPs actually correspond to the same service at the DNS level. FIG. 4(a) is a flowchart of an exemplary simplified process in which a DNS query in association with a service can be easily resolved with a fixed IP address. Initially, a fixed VIP address is stored, at 402, as an A record for each networked service. When a DNS query is received at 404, a DNS server identifies, at 406, a fixed VIP address associated with the service desired. Such identified fixed VIP address is then returned, at 408, to a client sending the DNS query. When the client receives the fixed VIP address, the client will use that fixed VIP address to send a service request to a router connected therewith.

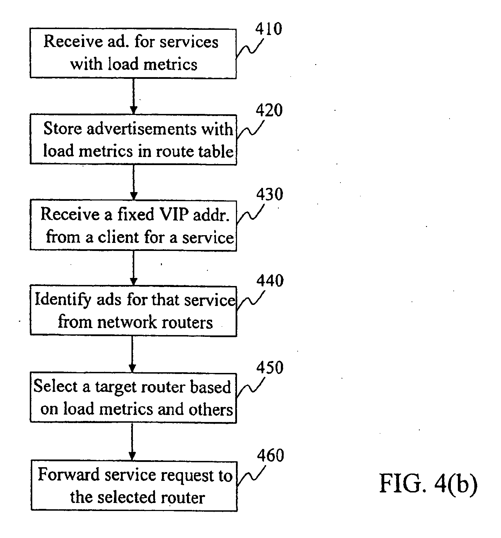

FIG. 4(b) is a flowchart of an exemplary process in which a router that is in receipt of a service request achieves load balancing in the control plane based on information from routers that advertise the requested service. Information from other routers in the network advertising networked services is first received at 410. As discussed above, such advertisement includes information or metrics indicating the health condition of server pools associated with the advertising routers. The received advertisements together with the relevant metrics are then stored, at 420, in a routing table associated with the router. When the router receives, at 430, a request for a service represented by a fixed VIP address from a client, the router identifies, at 440, entries in its routing table recording advertisement from other routers that advertise the requested service and selects, at 450, a target router from all routers advertising the same fixed VIP address based on the metrics indicating the health condition of their associated server pools. Based on the selection, the router then forwards, at 460, the received service request to the selected target router. In this process, the first level load balancing is achieved by selecting a target router based on health metrics of its associated server pool.

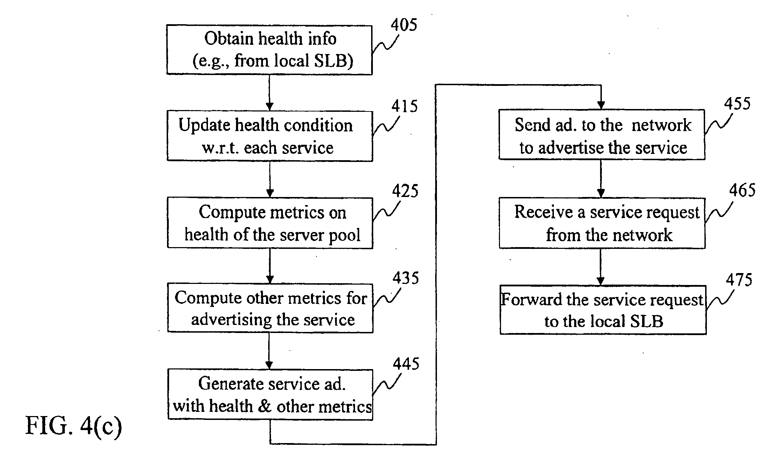

The second level of load balancing aims at selecting a target server from the server pool associated with the target router. This is achieved by an NGSLB connected to the target router that will choose a particular server from its associated server pool in a load balanced manner to provide the requested service. FIG. 4(c) is a flowchart of an exemplary process in which a target router, that advertised a service and is connected with a local server load balancer having an associated server pool providing a service, handles a service request. At 405, the router obtains information related to the health condition of a server pool associated therewith. Based on received health information, the router updates, at 415, information characterizing the health condition of the server pool and computes, at 425, metrics reflecting the updated health condition. To advertise the service, the router may also compute or incorporate, at 435, other metrics related to the servers providing the service. The router then generates an advertisement, at 445, that advertises the service via a pre-determined VIP address representing the service and sends, at 455, the advertisement for the service to the network.

When the servers in the server pool support more than one service, the router connected to the server pool may advertise each of the services in a similar manner. Each of the servers in the server pool may be configured to provide the same set of services. For example, a server pool of Microsoft may be configured to provide a set of Microsoft services such as Internet Information Service (IIS), Microsoft Chatroom services, or Microsoft Messaging services. In this case, for each service, a router connected to the server pool may individually advertise each of the services supported by the server pool and each advertisement for a service may be directed to a different VIP address representing the service advertised.

The router may send out the advertisement(s) according to some schedule. In some embodiments, it may repeat the advertisement periodically. In some embodiments, the router may send out an advertisement when there is a change in the health condition. The schedule to send out the advertisement may depend on the mode of operation of a recipient router. For instance, if the recipient router updates its routing table periodically and will wipe out stale records regularly, the advertising router may need to re-send an advertisement regularly to keep its advertisement active. On the other hand, when a server pool is in a poor health or in such a condition (e.g., totally overloaded or in an interrupted state) that the SLB is not able to gather health information about the server pool, the connected advertising router will not be able to update the advertisement. When this occurs, since other routers in the network cannot receive information from the router connected to a problem server pool, those routers in the network will not be able to select such a router as a target router and, hence, they inherently achieve load balancing.

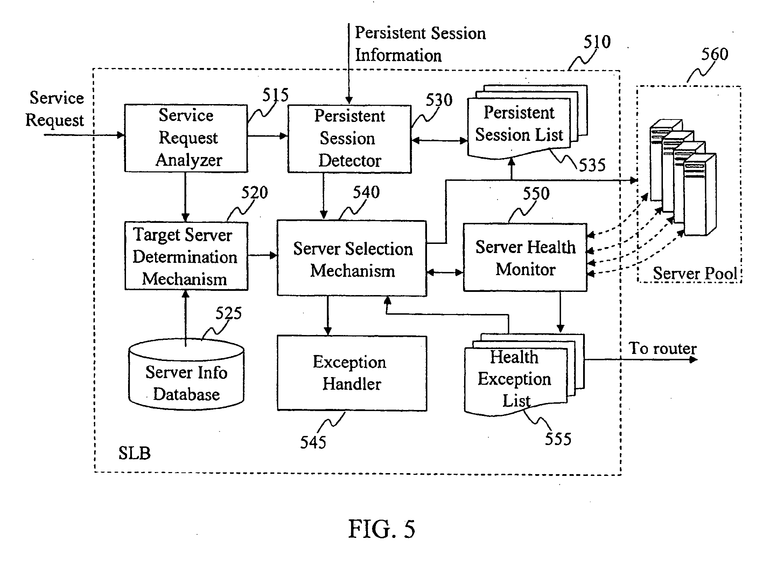

After a router sends out an advertisement advertising the services provided by the server pool associated with it, it may be selected as a target router for an advertised service. When this happens, the router may be in receipt, at 465, of a service request from the network. When the router receives the service request, it forwards, at 475, the service request to a local server load balancer (SLB) connected to it. As discussed above, from this point on, the SLB that is in receipt of the service request will proceed to perform the second level of load balancing by choosing one of the servers in the associated server pool to provide the requested service. Details related to the second level load balancing are discussed with reference to FIGs. 5-10.

FIG. 5 depicts an exemplary construct of a local sever load balancer (SLB) 510. As discussed above, a SLB takes a service request as input from a connected router and interfaces with a server pool 560 having one or more servers that provide one or more advertised services. The SLB 510 also interacts with the connected router to, e.g., provide health information related to the servers in the server pool. The SLB 510 functions to monitor the health of the servers in the server pool and selects a specific server from the server pool in a load balanced manner whenever it receives a service request from the connected router. The exemplary SLB 510 comprises a server health monitor 550, a service request analyzer 515, a target server determination mechanism 520, a server selection mechanism 540, a persistent session handler 530, and an exception handler 545. The SLB 510 may also include storage (525) for storing information related to servers in the server pool, information related to exceptions, which may include a list of servers (555) that are in poor health or service sessions that need to be persistent (535).

The server health monitor 550 may regularly check the health of the servers in the server pool and gather information that characterizes the health condition of the server pool. When certain poor health conditions of a particular server are detected, the server health monitor 550 may record such information in the health exception list 555. The persistent session detector 530 may be designed to detect any service session that needs to be persistent. For certain applications such as emails, session persistence is not needed. In other applications, a session, once started, needs to be maintained until it ends. One example of such a session persistent application is online shopping. In this case, even though a server that started the session is in poor health, in order to continue the service, load balancing has to consider this factor and choose the server that initiates the session to be the target server and a client has to wait until the initiating server recovers. To achieve that, the persistent session detector 530 determines whether any service request belongs to a persistent session and if it is, stores such information in a persistent session list 535. If a packet is received with a service request that is already in a previously initiated persistent session, the persistent session detector will notify the server selection mechanism 540 to make a note of that and select a target server according to that information.

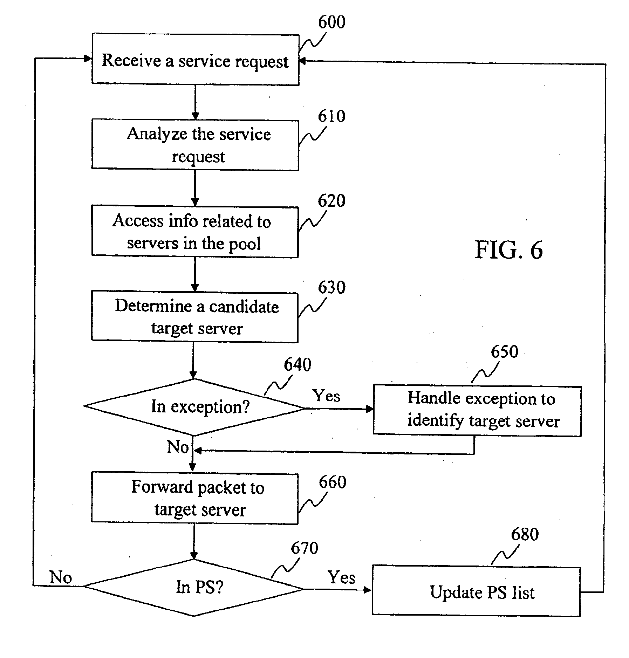

FIG. 6 is a flowchart of an exemplary process in which the SLB 510 operates to achieve local server load balancing. When the service request analyzer 515 receives, at 600, a service request (which may include a packet), it analyzes the service request at 610. To select a target server, the target server determination mechanism 520 accesses, at 620, information related to the servers in the server pool and determines, at 630, a candidate target server. Such a candidate target server is sent to the server selection mechanism 540, which determines, at 640, whether the candidate target server is an exception. If the candidate target server is involved in some form of exception, the server selection mechanism 540 invokes the exception handler to handle, at 650, the exception. Different exceptions may exist including exceptions caused by a server's health condition. For instance, when a server is in poor health, it may be included in the health exception list 555 so that even if it is selected as a candidate target server, an alternative target server should be selected. An exception may also be related to a persistent session, as discussed above. In this case, a selected candidate target server may also be replaced with a server that is initially selected to handle the session.

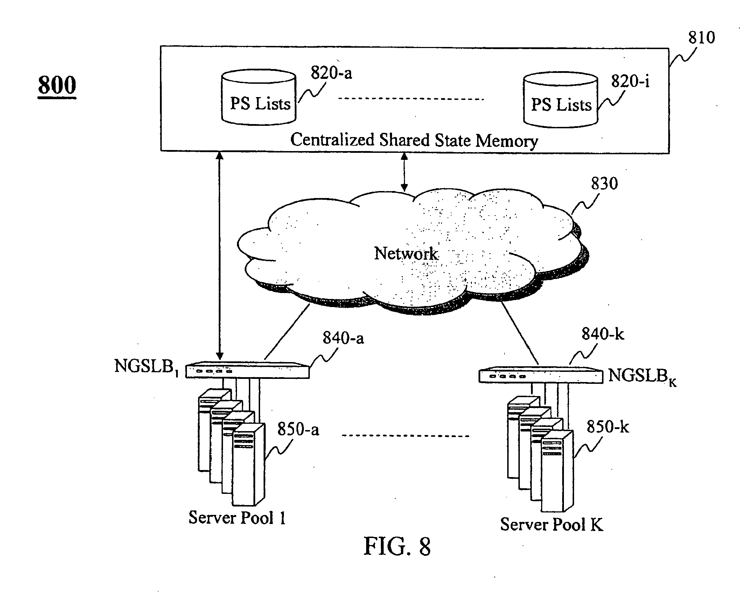

If there is no exception involved the server selection mechanism 540 proceeds by selecting the candidate server as the target server and then forwards, at 660, a packet related to the requested service (or the service request) to the selected target server. It is then determined, at 670, whether the current service request relates to a persistent session. If it does, the server selection mechanism 540 updates, at 680, the persistent session list 535 so that the next packet of the same service will be handled in a manner consistent with what is required for a persistent session. In the exemplary construct of SLB as shown in FIG. 5, the persistent session list 535 is shown to be within the SLB 510 and such a list of records information associated with all persistent sessions involving the servers in the server pool 560. In a more general case, persistent sessions across the network may be stored in some shared state memory, which may be accessed by all SLBs in order to handle persistent sessions properly. For example, when a server pool associated with a particular SLB is out of service, the load balancing operation will try to direct a request for service provided by the failed server pool to another server pool associated with another SLB. In this case, if the service request relates to a persistent session initiated by the failed server pool, the other SLB needs to have a means to detect that and handle it appropriately. In this case, a shared state memory may be deployed to store information about persistent sessions across all SLBs so that session persistency can be handled correctly. Details about such a shared state memory are discussed with reference to FIGs. 8-10.

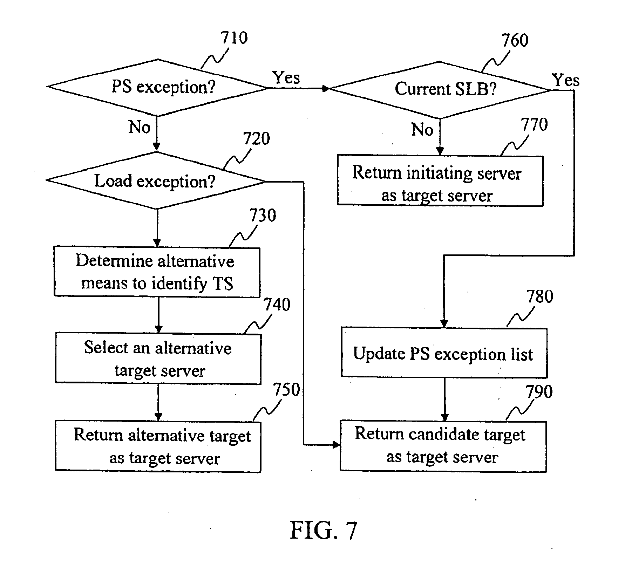

FIG. 7 is a flowchart of an exemplary process in which the exception handler 545 in a local server load balancer performs exception handling. The exception handler first checks, at 710, whether it is an exception related to a persistent session. If it is related to a persistent session exception, the exception handler 545 further determines, at 760, whether the initiating SLB is the current SLB. Such a check may be based on persistent session information stored in the persistent session list 535, which may be a part of a shared state memory. If it is, the exception handler updates, at 780, the persistent session list 535 (or a shared state memory as will be discussed later) and then returns, at 790, the candidate target server as the target server. If the initiating SLB is not the current SLB, the exception handler 545 returns, at 770, the initiating server in another SLB as the target server to the server selection mechanism 540.

If the exception is not related to a persistent session, the exception handler 545 proceeds to determine, at 720, whether the exception is related to a load exception caused by the health condition of the candidate target server. If it is not related to a load exception, the exception handler returns, at 790, the candidate target server to the server selection mechanism. Otherwise, the exception handler 545 determines, at 730, an alternative means to identify a target server and then selects, at 740, an alternative target server based on the alternative means. Such identified alternative target server is then returned, at 750, to the server selection mechanism 540.

As disclosed herein, when there are multiple SLBs associated with multiple server pools providing the same service, those SLBs need to share information related to persistent sessions and a shared state memory may be deployed in the load balancing scheme discussed herein to facilitate the sharing of persistent session information among SLBs. FIG. 8 depicts an exemplary architecture 800 in which a shared state memory is deployed for multiple local server load balancers to share information in order to appropriately handle persistent sessions. In architecture 800, there are multiple NGSLBs 840-a, ..., 840-k, that are associated with server pools 850-a, ..., 850-k, respectively. Those server pools provide the same service and, as discussed herein, load balancing is performed at two levels. One is at the level of selecting a SLB in the control plane of the network routers by selecting a target router, across network 830, that advertises the service with appropriate load condition, as described with reference to FIG. 2. The second level of load balancing is performed by an NGSLB connected to the selected target router, as discussed with reference to FIG. 5, by selecting one of the servers in its associated server pool to provide the requested service.

To ensure that persistent sessions can be handled properly, an SLB performs the second level load balancing by taking into account of sessions that are required to be persistent. To facilitate that, the architecture 800 includes a centralized shared state memory 810, which may comprise one or more centralized storages 820-a, ..., 820-k, that stores information about persistent sessions from all NGSLBs and allows any NGSLB to access the stored information so that persistent session related exceptions can be handled properly. In this illustrated architecture, one of the NGSLBs, e.g., NGSLB 840-a as illustrated in FIG. 8, may be designated to manage the centralized shared state memory 810, including coordinating the access, update, backup, etc. With such an architecture, other NGSLBs interact with the centralized share state memory through the designated NGSLB.

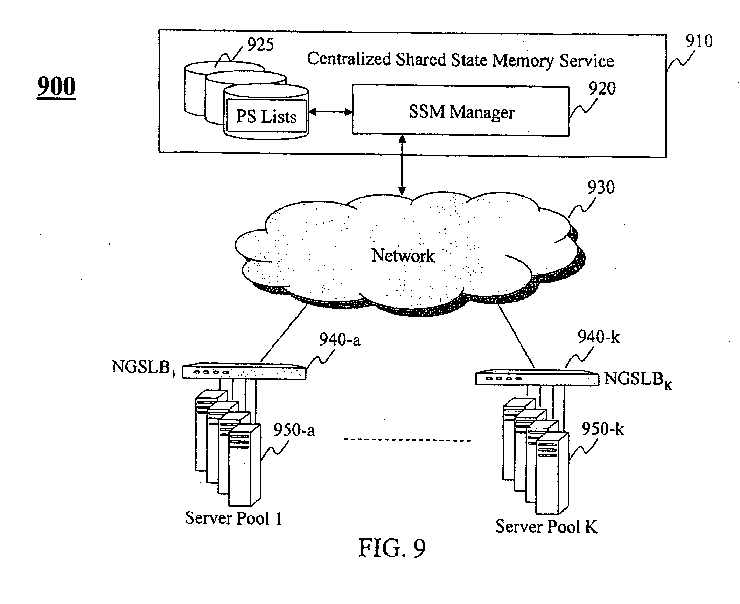

FIG. 9 depicts a different exemplary architecture 900 in which a shared state memory is deployed for multiple local server load balancers to share information in order to appropriately handle persistent sessions. In architecture 900, similarly, there are multiple NGSLBs 940-a, ..., 940-k, that are associated with server pools 950-a, ..., 950-k, respectively. To ensure that persistent sessions can be handled properly, the architecture 900 also includes a centralized shared state memory 910 that comprises one or more centralized storages 925 to store information related to persistent sessions across multiple NGSLBs. Instead of designating one of the NGSLBs to manage the centralized shared state memory, architecture 900 employs a shared state memory (SSM) manager 920, residing outside of any of the NGSLBs to manage the centralized shared state storages 925, including access, update, backup of the information related to persistent sessions, etc. In this illustrated architecture, NGSLBs connected via network 930 access and update their own persistent sessions or persistent sessions initiated by other NGSLBs through the SSM manager 920. The SSM manager 920 may be either a part of a product achieving the load balancing scheme as disclosed herein or a third party service provider.

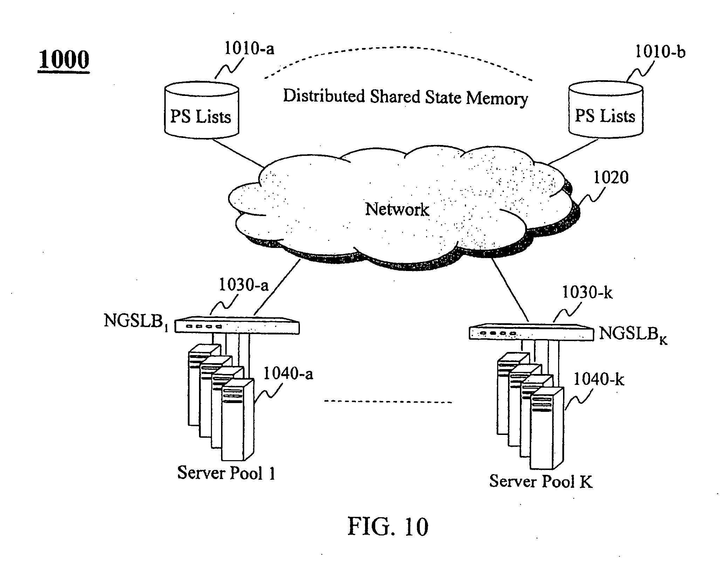

FIG. 10 depicts yet another exemplary architecture 1000 in which a distributed shared state memory structure is employed for multiple local server load balancers to share information in order to appropriately handle persistent sessions. In this illustrated architecture, multiple shared state memories 1010-a, ..., 1010-k are distributed in the network and each may be accessed by one or more NGSLBs connected via network 1020. To manage contention in accessing and/or updating persistent session information, each distributed shared state memory may be associated with some mechanism (not shown) such as a semaphore or the like to prevent simultaneous attempts from multiple NGSLBs to access information which may lead to data inconsistency. Any technology known in the art or developed in the future in terms of coordinating distributed memories may be employed to implement the distributed SSMs.

Computer hardware platforms may be used as the hardware platform(s) for one or more of the elements described herein (e.g., an NGSLB, a router that either advertises a service or performs load balancing via information stored in its routing table). The hardware elements, operating systems and programming languages of such computers are conventional in nature, and it is presumed that those skilled in the art are adequately familiar therewith. A computer with user interface elements may be used to implement a personal computer (PC) or other type of work station or terminal device, although a computer may also act as a server if appropriately programmed. It is believed that those skilled in the art are familiar with the structure, programming and general operation of such computer equipment and as a result the drawings should be self-explanatory.

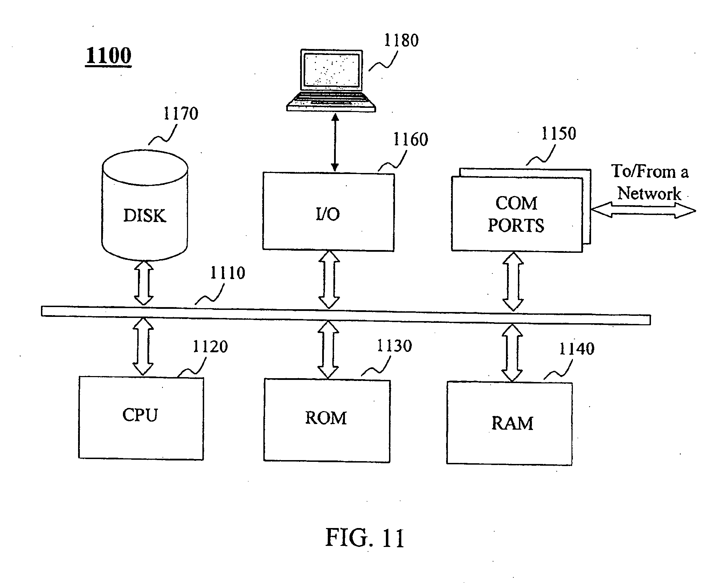

FIG. 11 provides a functional block diagram illustrations of general purpose computer hardware platforms with user interface elements. This general purpose computer 1100 with hardware platforms and user interface elements can be used to implement any components of the load balancing architecture as described herein. For example, the DNS server that maps a service to a fixed VIP address, a router which could be an advertising router or a router that performs global balancing in the control plane, an NGSLB that performs local load balancing in the data plane and their functionalities can be implemented on a computer, via its hardware platform, software program, firmware, or a combination thereof. The computer 1100, for example, includes COM ports 1150 connected to and from a network connected thereto to facilitate data communication. The computer 1100 also includes a central processing unit (CPU) 1120, in the form of one or more processors, for executing program instructions. The computer platform typically includes an internal communication bus 1110, program storage and data storage of different forms, e.g., disk 1170, read only memory (ROM) 1130, and random access memory (RAM) 1140, for various data files to be processed and/or communicated by the computer, as well as possibly program instructions to be executed by the CPU. The computer 1100 also includes an I/O component 1160, supporting input/output flows between the computer and user interface elements 1180. In some embodiments, the computer 1100 may also receive programming and data via network communications.

The hardware elements, operating systems and programming languages of such servers are conventional in nature, and it is presumed that those skilled in the art are adequately familiar therewith. Of course, the computer functions may be implemented in a distributed fashion on a number of similar platforms, to distribute the processing load. Hence, aspects of the methods of receiving message sending requests through a common communication port in a computer or network device from a variety of client applications, as outlined above, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory of the computers, processors or the like, or associated modules thereof, such as various semiconductor memories, tape drives, disk drives and the like, which may provide storage at any time for the software programming.

All or portions of the software may at times be communicated through the Internet or various other telecommunication networks. Such communications, for example, may enable loading of the software from one computer or processor into another, for example, from a management server or host computer of the network operator or carrier into the platform of the message server or other device implementing a message server or similar functionality. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non-volatile storage media include, for example, optical or magnetic disks, such as any of the storage devices in any computer(s) or the like, which may be used to implement the system or any of its components as shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

Those skilled in the art will recognize that the present teachings are amenable to a variety of modifications and/or enhancements. For example, although the implementation of various components described above may be embodied in a hardware device, it can also be implemented as a software only solution-e.g., requiring installation on an existing server. In addition, a DNS server, a router, or an NGSLB as disclosed herein can also be implemented as a firmware, firmware/software combination, firmware/hardware combination, or hardware/firmware/software combination.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

## Claims

1. A method, implemented on a first router (325) having a processor, a storage, and a communication platform connected to a network (320) for load balancing with respect to services (360), comprising the steps of:
receiving, by the first router (325) via the network (320), a request for a service represented by a fixed virtual IP address;
accessing information received from a plurality of advertising routers (325, 330, 335, 340) in the network (320), each of which advertises, via the fixed virtual IP address, the service, provided by at least one server in a server pool (360) associated with each of the advertising routers (325, 330, 335, 340), with metrics indicating a health condition of the associated server pool (360);
achieving a first level load balancing by selecting, by the first router (325), a target one of the advertising routers (325, 330, 335, 340) based on, at least in part, the metrics indicating the health condition of the server pools (360) associated with the advertising routers (325, 330, 335, 340); and
forwarding the request for the service to the target router, wherein a local server load balancer; SLB; (350) connected with the target router achieves a second level load balancing by identifying a target server from the associated server pool (360) to provide the requested service.

2. The method of claim 1, wherein the information received from each of the advertising routers (325, 330, 335, 340) is generated by the advertising router by:
obtaining dynamically information related to health of each server in the associated server pool (360) capable of providing the service represented by the fixed virtual IP address;
computing the metrics indicating the health condition of the associated server pool (360); and
generating the information based on the metrics to advertise the service via the fixed virtual IP address.

3. The method of claim 1 or 2, wherein the target router is selected to forward the service request to the local SLB (350) when the target router receives the service request from the first router (325).

4. The method of any one of the preceding claims, wherein the target server is to be identified by the local SLB (350) via the steps of:
selecting a candidate target server based on information related to the servers in the server pool (360);
performing exception handling with respect to the candidate target server if exception exists; and
returning the candidate target server as the target server if no exception exists.

5. The method of claim 4, wherein the exception is handled by either processing a session persistence exception or a health exception, :
wherein the session persistence exception is processed, if the requested service corresponds to an existing session that is to be persisted, to identify the target server that is consistent with the persistent session, wherein the session persistence exception can be processed by:
determining an initiating server that initiated the persistent session;
electing the candidate target server as the target server if the candidate target server is the initiating server; and
electing the initiating server as the target server if the candidate target server is not the initiating server; and
wherein the health exception is processed, if the candidate target server is in an exception due to server health, to identify the target server to avoid the health exception, wherein the health exception can be processed by:
determining an alternative target server;
returning the alternative target server as the target server to provide the requested service.

6. The method of claim 4, wherein the local SLB (350) is to further recognize whether the requested service corresponds to a persistent session and if so, update a persistent session, PS, record.

7. The method of claim 6,
wherein the local SLB updates the PS record by:
sending a request to a designated local SLB to update a PS record in a centralized shared state memory, SSM, managed by the designated local SLB, wherein the designated local SLB is designated to manage the centralized SSM; and
transmitting information related to the requested service and a server that initiates the persistent session to the designated local SLB to facilitate the requested update;
or
wherein the local SLB updates the PS record by:
sending a request to a SSM manager to update a PS record in a centralized SSM, managed by the SSM manager; and
transmitting information related to the requested service and a server that initiates the persistent session to the SSM manager to facilitate the requested update; or
wherein the local SLB updates the PS record by:
sending a request to a distributed SSM to update a PS record hosted by the distributed SSM; and
transmitting information related to the requested service and a server that initiates the persistent session to the distributed SSM to facilitate the requested update.

8. A method, implemented on a first advertising router (325) having a processor, a storage, and a communication platform connected to a network (320) for loading balancing with respect to networked services, comprising the steps of:
obtaining, dynamically by the first advertising router (325), information related to health of at least one server in a pool of servers associated with the first advertising router, where all of servers in the pool of server (360) provide a service represented by a fixed virtual IP address;
computing metrics indicating health condition of the associated server pool based at least in part on the information related to health;
generating an advertisement based, at least in part, on the metrics; and
sending the advertisement to a plurality of routers in the network to advertise the service via the fixed virtual IP address with the health metrics transmitted therewith,
wherein a first level load balancing among servers associated with the first advertising router and one or more other advertising routers, all of which advertise the service via the fixed virtual IP address across the network (320), is achieved based on the advertisements transmitted by all the advertising routers.

9. The method of claim 8, further comprising:
receiving, by the first advertising router, a request for the service with the fixed virtual IP address;
forwarding the service request to a local server load balancer (SLB) (350) connected with the first advertising router so that the local SLB (350) is to select a target server to provide the requested service so as to achieve a second level load balancing with respect to the server pool (360) associated with the first advertising router (325).

10. The method of claim 9, wherein the local SLB (350) is to achieve a second level load balancing by:
analyzing the service request received from the first advertising router (325);
identifying a target server from the server pool (360); and
forwarding a packet in connection with the requested service to the target server.

11. The method of claim 10, wherein the target server is identified by:
selecting a candidate target server based on information related to at least one server in the server pool (360);
performing exception handling with respect to the candidate target server if exception exists; and
returning the candidate target server as the target server if no exception exists;
wherein the exception can be handled by:
processing a session persistence exception if the requested service corresponds to an existing session that is to be persisted to yield the target server consistent with the persistent session;
processing a health exception if the candidate target server is excepted due to server health to produce the target server to avoid a health exception.

## Patentansprüche

1. Verfahren, das auf einem ersten Router (325) implementiert ist, der einen Prozessor, einen Speicher und eine Kommunikationsplattform aufweist, die mit einem Netzwerk (320) verbunden ist, zum Lastausgleich in Bezug auf Dienste (360), umfassend die nachfolgenden Schritte:
durch den ersten Router (325) über das Netzwerk (320) erfolgendes Empfangen einer Anforderung für einen Dienst, der durch eine feste virtuelle IP-Adresse dargestellt wird;
Zugreifen auf Information, die von einer Mehrzahl von anbietenden Routern (325, 330, 335, 340) in dem Netzwerk (320) empfangen wird, von denen jeder über die feste virtuelle IP-Adresse den Dienst anbietet, mit Bereitstellung durch wenigstens einen Server in einem Serverpool (360), der jedem der anbietenden Router (325, 330, 335, 340) zugeordnet ist, mit Metriken zur Angabe eines Intaktheitszustandes des zugeordneten Serverpools (360);
Erreichen eines Lastausgleiches ersten Grades durch durch den ersten Router (325) erfolgendes Auswählen eines Zielrouters der anbietenden Router (325, 330, 335, 340) wenigstens teilweise auf Grundlage der Metriken zur Angabe des Intaktheitszustandes des Serverpools (360), der den anbietenden Routern (325, 330, 335, 340) zugeordnet ist; und
Weiterleiten der Anforderung für den Dienst an den Zielrouter, wobei ein lokaler Serverlastausgleicher SLB (350), der mit dem Zielrouter verbunden ist, einen Lastausgleich zweiten Grades durch Identifizieren eines Zielservers aus dem zugeordneten Serverpool (360) zur Bereitstellung des angeforderten Dienstes erreicht.

2. Verfahren nach Anspruch 1, wobei die Information, die von jedem der anbietenden Router (325, 330, 335, 340) empfangen wird, von dem anbietenden Router erzeugt wird durch:
dynamisches Ermitteln von Information im Zusammenhang mit der Intaktheit eines jeden Servers in dem zugeordneten Serverpool (360) mit der Fähigkeit zur Bereitstellung des Dienstes, der durch die feste virtuelle IP-Adresse dargestellt wird;
Berechnen der Metriken zur Angabe des Intaktheitszustandes des zugeordneten Serverpools (360); und
Erzeugen der Information auf Grundlage der Metriken zum Anbieten des Dienstes über die feste virtuelle IP-Adresse.

3. Verfahren nach Anspruch 1 oder 2, wobei der Zielrouter ausgewählt wird zum Weiterleiten der Dienstanforderung an den lokalen SLB (350), wenn der Zielrouter die Dienstanforderung von dem ersten Router (325) empfängt.

4. Verfahren nach einem der vorherigen Ansprüche, wobei der Zielserver von dem lokalen SLB (350) durch die nachfolgenden Schritte identifiziert werden soll:
Auswählen eines Kandidatenzielservers auf Grundlage von Information im Zusammenhang mit den Servern in dem Serverpool (360);
Durchführen einer Ausnahmebehandlung in Bezug auf den Kandidatenzielserver, wenn eine Ausnahme vorhanden ist; und
Ausgeben des Kandidatenzielservers als Zielserver, wenn keine Ausnahme vorhanden ist.

5. Verfahren nach Anspruch 4, wobei die Ausnahme entweder durch Verarbeiten einer Sitzungsfortsetzungsausnahme oder einer Intaktheitsausnahme behandelt wird,
wobei die Sitzungsfortsetzungsausnahme verarbeitet wird, wenn der angeforderte Dienst einer vorhandenen Sitzung, die fortgesetzt werden soll, entspricht, um den Zielserver zu identifizieren, der mit der Fortsetzungssitzung konsistent ist, wobei die Sitzungsfortsetzungsausnahme verarbeitet werden kann durch:
Bestimmen eines initiierenden Servers, der die Fortsetzungssitzung initiiert hat;
Auswählen des Kandidatenzielservers als Zielserver, wenn der Kandidatenzielserver der initiierende Server ist; und
Auswählen des initiierenden Servers als Zielserver, wenn der Kandidatenzielserver nicht der initiierende Server ist; und
wobei die Intaktheitsausnahme verarbeitet wird, wenn der Kandidatenzielserver infolge der Serverintaktheit in einer Ausnahme befindlich ist, um den Zielserver zur Vermeidung der Intaktheitsausnahme zu identifizieren, wobei die Intaktheitsausnahme verarbeitet werden kann durch:
Bestimmen eines alternativen Zielservers;
Ausgeben des alternativen Zielservers als Zielserver zur Bereitstellung des angeforderten Dienstes.

6. Verfahren nach Anspruch 4, wobei der lokale SLB (350) dem weiteren Erkennen, ob der angeforderte Dienst einer Fortsetzungssitzung entspricht, und bejahendenfalls dem Aktualisieren eines PS-Eintrages (Persistent Session PS, Fortsetzungssitzung) dient.

7. Verfahren nach Anspruch 6,
wobei der lokale SLB den PS-Eintrag aktualisiert durch:
Senden einer Anforderung an einen bezeichneten lokalen SLB zur Aktualisierung eines PS-Eintrages in einem zentralisierten SSM (Shared State Memoy SSM, gemeinsam genutzter Zustandsspeicher), der von dem bezeichneten lokalen SLB verwaltet wird, wobei der bezeichnete lokale SLB zur Verwaltung des zentralisierten SSM ausgelegt ist; und
Übertragen von Information im Zusammenhang mit dem angeforderten Dienst und einem Server, der die Fortsetzungssitzung initiiert, an den bezeichneten lokalen SLB zur Erleichterung der angeforderten Aktualisierung;
oder
wobei der lokale SLB den PS-Eintrag aktualisiert durch:
Senden einer Anforderung an einen SSM-Verwalter zur Aktualisierung eines PS-Eintrages in einem zentralisierten SSM, der von dem SSM-Verwalter verwaltet wird; und
Senden von Information im Zusammenhang mit dem angeforderten Dienst und einem Server, der die Fortsetzungssitzung initiiert, an den SSM-Verwalter zur Erleichterung der angeforderten Aktualisierung;
oder
wobei der lokale SLB den PS-Eintrag aktualisiert durch:
Senden einer Anforderung an einen verteilten SSM zur Aktualisierung eines PS-Eintrages, der von dem verteilten SSM als Host betreut wird; und
Übertragen von Information im Zusammenhang mit dem angeforderten Dienst und einem Server, der die Fortsetzungssitzung initiiert, an den verteilten SSM zur Erleichterung der angeforderten Aktualisierung.

8. Verfahren, das auf einem ersten anbietenden Router (325) implementiert ist, der einen Prozessor, einen Speicher und eine Kommunikationsplattform aufweist, die mit einem Netzwerk (320) verbunden ist, zum Lastausgleich in Bezug auf vernetzte Dienste, umfassend die nachfolgenden Schritte:
dynamisches durch den ersten anbietenden Router (325) erfolgendes Ermitteln von Information im Zusammenhang mit der Intaktheit wenigstens eines Servers in einem Pool von Servern, der dem ersten anbietenden Router zugeordnet ist, wobei alle Server in dem Pool von Servern (360) einen Dienst bereitstellen, der durch eine feste virtuelle IP-Adresse dargestellt wird;
Berechnen von Metriken zur Angabe eines Intaktheitszustandes des zugeordneten Serverpools wenigstens teilweise auf Grundlage der Information im Zusammenhang mit der Intaktheit;
Erzeugen eines Angebots wenigstens teilweise auf Grundlage der Metriken; und
Senden des Angebots an eine Mehrzahl von Routern in dem Netzwerk zum Anbieten des Dienstes über die feste virtuelle IP-Adresse mit den damit übertragenen Intaktheitsmetriken,
wobei ein Lastausgleich ersten Grades unter Servern, die dem ersten anbietenden Router und einem oder mehreren anderen anbietenden Routern zugeordnet sind, von denen alle den Dienst über die feste virtuelle IP-Adresse über das Netzwerk (320) anbieten, auf Grundlage der Angebote, die von allen anbietenden Routern übermittelt werden, erreicht wird.

9. Verfahren nach Anspruch 8, des Weiteren umfassend:
durch den ersten anbietenden Router erfolgendes Empfangen einer Anforderung für den Dienst mit der festen virtuellen IP-Adresse;
Weiterleiten der Dienstanforderung an einen lokalen Serverdienstausgleicher SLB (350), der mit dem ersten anbietenden Router verbunden ist, sodass der lokale SLB (350) einen Zielserver zur Bereitstellung des angeforderten Dienstes auswählen soll, um so einen Lastausgleich zweiten Grades in Bezug auf den Serverpool (360), der dem ersten anbietenden Router (325) zugeordnet ist, zu erreichen.

10. Verfahren nach Anspruch 9, wobei der lokale SLB (350) einem Erreichen eines Lastausgleichs zweiten Grades dient durch:
Analysieren der Dienstanforderung, die von dem ersten anbietenden Router (325) empfangen wird;
Identifizieren eines Zielservers von dem Serverpool (360); und
Weiterleiten eines Paketes in Verbindung mit dem angeforderten Dienst an den Zielserver.

11. Verfahren nach Anspruch 10, wobei der Zielserver identifiziert wird durch:
Auswählen eines Kandidatenzielservers auf Grundlage von Information im Zusammenhang mit wenigstens einem Server in dem Serverpool (360);
Durchführen einer Ausnahmebehandlung in Bezug auf den Kandidatenzielserver, wenn eine Ausnahme vorhanden ist; und
Ausgeben des Kandidatenzielservers als Zielserver, wenn keine Ausnahme vorhanden ist;
wobei die Ausnahme behandelt werden kann durch:
Verarbeiten einer Sitzungsfortsetzungsausnahme, wenn der angeforderte Dienst einer bestehenden Sitzung, die fortgesetzt werden soll, entspricht, um den Zielserver konsistent mit der Fortsetzungssitzung zu halten;
Verarbeiten einer Intaktheitsausnahme, wenn der Kandidatenzielserver infolge einer Serverintaktheit ausgenommen ist, um den Zielserver zur Vermeidung einer Intaktheitsausnahme zu erzeugen.

## Revendications

1. Procédé mis en oeuvre sur un premier routeur (325) ayant un processeur, un stockage et une plate-forme de communication connectée à un réseau (320) pour l'équilibrage de charge par rapport à des services (360), comprenant les étapes consistant à :
recevoir par le premier routeur (325) par le biais du réseau (320) une demande pour un service représenté par une adresse IP virtuelle fixe ;
accéder à des informations reçues d'une pluralité de routeurs de publicité (325, 330, 335, 340) dans le réseau (320) dont chacun fait la publicité du service par le biais de l'adresse IP virtuelle fixe fourni par au moins un serveur dans un groupe de serveurs (360) associé à chacun des routeurs de publicité (325, 330, 335, 340) avec des mesures indiquant une condition de santé du groupe de serveurs associé (360) ;
obtenir un équilibrage de charge de premier niveau en sélectionnant par le premier routeur (325) un routeur cible des routeurs de publicité (325, 330, 335, 340) en fonction au moins en partie des mesures indiquant la condition de santé des groupes de serveurs (360) associés aux routeurs de publicité (325, 330, 335, 340) ; et
transférer la demande pour le service au routeur cible, dans lequel un équilibreur de charge de serveur local, SLB, (350) connecté au routeur cible obtient un équilibrage de charge de second niveau en identifiant un serveur cible parmi le groupe de serveurs associé (360) pour fournir le service demandé.

2. Procédé selon la revendication 1, dans lequel les informations reçues de chacun des routeurs de publicité (325, 330, 335, 340) sont générées par le routeur de publicité en :
obtenant dynamiquement des informations concernant la santé de chaque serveur dans le groupe de serveurs associé (360) capable de fournir le service représenté par l'adresse IP virtuelle fixe ;
calculant les mesures indiquant la condition de santé du groupe de serveurs associé (360) ; et
générant les informations en fonction des mesures pour faire la publicité du service par le biais de l'adresse IP virtuelle fixe.

3. Procédé selon la revendication 1 ou 2, dans lequel le routeur cible est sélectionné pour transférer la demande de service au SLB local (350) lorsque le routeur cible reçoit la demande de service du premier routeur (325).

4. Procédé selon l'une quelconque des revendications précédentes, dans lequel le serveur cible doit être identifié par le SLB local (350) par le biais des étapes consistant à :
sélectionner un serveur cible candidat en fonction d'informations concernant les serveurs dans le groupe de serveurs (360) ;
réaliser une gestion d'exception par rapport au serveur cible candidat si une exception existe ; et
renvoyer le serveur cible candidat comme serveur cible si aucune exception n'existe.

5. Procédé selon la revendication 4, dans lequel l'exception est gérée en traitant soit une exception de persistance de session, soit une exception de santé ;
dans lequel l'exception de persistance de session est traitée si le service demandé correspond à une session existante qui doit persister afin d'identifier le serveur cible qui est cohérent avec la session persistante, dans lequel l'exception de persistance de session peut être traitée en :
déterminant un serveur d'initiation qui a initié la session persistante ;
élisant le serveur cible candidat comme serveur cible si le serveur cible candidat est le serveur d'initiation ; et
élisant le serveur d'initiation comme serveur cible si le serveur cible candidat n'est pas le serveur d'initiation ; et
dans lequel l'exception de santé est traitée si le serveur cible candidat est dans une exception en raison de la santé du serveur afin d'identifier le serveur cible pour éviter l'exception de santé, dans lequel l'exception de santé peut être traitée en :
déterminant une variante de serveur cible ;
renvoyant la variante de serveur cible comme serveur cible pour fournir le service demandé.

6. Procédé selon la revendication 4, dans lequel le SLB local (350) doit en outre reconnaître si le service demandé correspond à une session persistante et, si c'est le cas, mettre à jour un enregistrement de session persistante, PS.

7. Procédé selon la revendication 6,
dans lequel le SLB local met à jour l'enregistrement de PS en :
envoyant une demande à un SLB local désigné de mettre à jour un enregistrement de PS dans une mémoire d'état partagée centralisée, SSM, gérée par le SLB local désigné, dans lequel le SLB local désigné est conçu pour gérer la SSM centralisée ; et
transmettant des informations concernant le service demandé et un serveur qui initie la session persistante au SLB local désigné pour faciliter la mise à jour demandée ;
ou
dans lequel le SLB local met à jour l'enregistrement de PS en :
envoyant une demande à un gestionnaire de SSM de mettre à jour un enregistrement de PS dans une SSM centralisée gérée par le gestionnaire de SSM ; et
transmettant des informations concernant le service demandé et un serveur qui initie la session persistante au gestionnaire de SSM pour faciliter la mise à jour demandée ;
ou
dans lequel le SLB local met à jour l'enregistrement de PS en :
envoyant une demande à une SSM distribuée de mettre à jour un enregistrement de PS hébergé par la SSM distribuée ; et
transmettant des informations concernant le service demandé et un serveur qui initie la session persistante à la SSM distribuée pour faciliter la mise à jour demandée.

8. Procédé mis en oeuvre sur un premier routeur de publicité (325) ayant un processeur, un stockage et une plate-forme de communication connectée à un réseau (320) pour l'équilibrage de charge par rapport à des services mis en réseau, comprenant les étapes consistant à :
obtenir dynamiquement par le premier routeur de publicité (325) des informations concernant la santé d'au moins un serveur dans un groupe de serveurs associé au premier routeur de publicité, où l'ensemble des serveurs dans le groupe de serveurs (360) fournissent un service représenté par une adresse IP virtuelle fixe ;
calculer des mesures indiquant une condition de santé du groupe de serveurs associé en fonction au moins en partie des informations concernant la santé ;
générer une publicité en fonction au moins en partie des mesures ; et
envoyer la publicité à une pluralité de routeurs dans le réseau pour faire la publicité du service par le biais de l'adresse IP virtuelle fixe avec les mesures de santé transmises avec celle-ci,
dans lequel un équilibrage de charge de premier niveau parmi des serveurs associés au premier routeur de publicité et à un ou plusieurs autres routeurs de publicité dont l'ensemble font la publicité du service par le biais de l'adresse IP virtuelle fixe sur le réseau (320), est obtenu en fonction des publicités transmises par l'ensemble des routeurs de publicité.

9. Procédé selon la revendication 8, comprenant en outre :
recevoir par le premier routeur de publicité une demande pour le service avec l'adresse IP virtuelle fixe ;
transférer la demande de service à un équilibreur de charge de serveur local (SLB) (350) connecté au premier routeur de publicité de sorte que le SLB local (350) doit sélectionner un serveur cible pour fournir le service demandé de manière à obtenir un équilibrage de charge de second niveau par rapport au groupe de serveurs (360) associé au premier routeur de publicité (325).

10. Procédé selon la revendication 9, dans lequel le SLB local (350) doit obtenir un équilibrage de charge de second niveau en :
analysant la demande de service reçue du premier routeur de publicité (325) ;
identifiant un serveur cible parmi le groupe de serveurs (360) ; et
transférant un paquet en connexion avec le service demandé au serveur cible.

11. Procédé selon la revendication 10, dans lequel le serveur cible est identifié en :
sélectionnant un serveur cible candidat en fonction d'informations concernant au moins un serveur dans le groupe de serveurs (360) ;
réalisant une gestion d'exception par rapport au serveur cible candidat si une exception existe ; et
renvoyant le serveur cible candidat comme serveur cible si aucune exception n'existe ;
dans lequel l'exception peut être gérée en :
traitant une exception de persistance de session si le service demandé correspond à une session existante qui doit persister pour donner le serveur cible cohérent avec la session persistante ;
traiter une exception de santé si le serveur cible candidat est excepté en raison de la santé du serveur pour produire le serveur cible afin d'éviter une exception de santé.
